## Europäisches Patentamt

## European Patent Office

## Office européen des brevets

(19)

(11) Veröffentlichungsnummer: **0 267 989**
**B1**

(12) # EUROPÄISCHE PATENTSCHRIFT

(45) Veröffentlichungstag der Patentschrift:
08.08.90

(51) Int. Cl.⁵: **B65G 63/00**

(21) Anmeldenummer: 86117563.6

(22) Anmeldetag: 17.12.86

(54) **Anlage zum Umsetzen von Transportgut, insbesondere von Containern.**

(30) Priorität: 18.11.86 DE 3639423

(43) Veröffentlichungstag der Anmeldung:
25.05.88 Patentblatt 88/21

(45) Bekanntmachung des Hinweises auf die Patenterteilung:
08.08.90 Patentblatt 90/32

(84) Benannte Vertragsstaaten:
AT BE CH DE ES FR GB IT LI NL SE

(56) Entgegenhaltungen:
EP-A- 0 049 712
CH-A- 395 858
DE-A- 3 419 363
DE-C- 1 147 528

(73) Patentinhaber: Stolzmann, Klaus-Dieter, Meiendorfer Strasse 25, D-2000 Hamburg 73(DE)
Patentinhaber: Helmut Hillmer Inh. Reinhard Dobrindt, Ochsenwerder Landstrasse 33, D-2050 Hamburg 80(DE)

(72) Erfinder: Stolzmann, Klaus-Dieter, Meiendorfer Strasse 25, D-2000 Hamburg 73(DE)

(74) Vertreter: Richter, Joachim, Dipl.-Ing. et al, Patentanwälte Richter, J., Dipl.-Ing. Werdermann, F, Dipl.-Ing. Neuer Wall 10, D-2000 Hamburg 36(DE)

## Beschreibung

Die Erfindung betrifft eine Anlage zum Umsetzen von Transportgut, insbesondere von Behältern, wie Containern, von in einer Richtung sich bewegenden Transportmitteln, insbesondere Eisenbahnfahrzeugen, mit an dem Fahrzeugrahmen vorgesehenen Seilhaken, auf ortsbewegliche Abstellflächen, insbesondere Lastkraftwagen, schienengebundene Fahrzeuge, auch für den innerbetrieblichen Transport, u.dgl., unter Verwendung einer Positionierungseinrichtung für die Positionierung des Eisenbahnfahrzeuges im Umsetzbereich, wobei die Anlage aus einer ortsfesten, hydraulischen oder mittels anderer geeigneter Antriebseinrichtungen angetriebenen Hubvorrichtung für das Transportgut mit vier Hubsäulen, von denen jeweils zwei Hubsäulen auf jeder Seite des Fahrzeuggleises im Abstand voneinander angeordnet sind und die Hubsäulen der einen Seite der Hubvorrichtung den Hubsäulen der anderen Seite gegenüberliegend sind, wobei jede Hubsäule aus vier sich zu einer quadratischen oder rechteckförmigen Grundfläche ergänzenden, senkrechten Führungsholmen und einem in den Führungsholmen in senkrechter Richtung verfahrbaren Hubschlitten besteht, der mittels einer Antriebseinrichtung heb- und senkbar ist und der einen waagerechten Tragarm aufweist, der mittels einer Antriebseinrichtung in waagerechter Richtung ein- und ausfahrbar ist, wobei die Tragarme der Hubschlitten der Hubsäulen auf der einen Seite des Fahrzeuggleises den Tragarmen der Hubschlitten der Hubsäulen auf der anderen Seite des Fahrzeuggleises sich gegenüberliegend sind und alle Tragarme in den Transportgutbereich einfahrbar und aus diesem ausfahrbar sind, und wobei die Antriebseinrichtungen für die Hubschlitten und für die Tragarme als hydraulische, druckluftbetriebene, elektromotorische oder brennkraftmaschinenbetriebene Antriebe ausgebildet sind, und aus einer Gleitfahrzeugpositionierungs- und -schleppvorrichtung besteht/ die aus einem mittels einer Antriebseinrichtung in Fahrzeuggleislängsrichtung verfahrbaren Transporteinrichtung mit einem in der Bewegungsbahn des Transportmittelangriffspunktes liegenden Kopplungsarm besteht der an dem zu transportierenden Transportmittel befestigbar ist.

Insbesondere ortsfeste Umsetzanlagen haben einen räumlich eng begrenzten Aktionsradius und sind daher darauf angewiesen, daß das Transportmittel den Anlagen zugeführt wird, wobei es auch oftmals erforderlich ist, daß das Transportfahrzeug abschnittsweise, und zwar in Abhängigkeit von den jeweils bereits beladenen Bereichen der Gesamtladefläche weiterbewegt werden muß um von den bereits beladenen Bereichen der Ladefläche den noch unbeladenen Ladeflächenbereich in den Bereich der Hubeinrichtung zu bringen, oder wenn es z.B. gilt, bei Behälterfahrzeugen für Schüttgüter die Einfüllöffnung mit dem Einfüllstutzen der Füllanlage in Deckung zu bringen, was nur durch Verfahren des Fahrzeuges möglich ist. Bei selbstfahrenden Transportfahrzeugen ist dieses Verfahren der Transportfahrzeuge nicht mit Schwierigkeiten verbunden, da diese Transportfahrzeuge über eigene Antriebsmittel verfügen. Jedoch bei gleisgebundenen Fahrzeugen, wie z.B. Waggons, die nicht mit eigenem Antrieb verfahrbar sind, sind zusätzliche Einrichtungen erforderlich, um das Fahrzeug in die Umsetzeinrichtung zu bewegen und darüber hinaus auch noch zu positionieren, um das von der Ladefläche des Waggons abzuhebende Transportgut positionsgerecht abheben oder, im umgekehrten Falle, aufsetzen zu können. Für dieses Verholen bzw. Verschieben der einzelnen Waggons in dem Bereich der Umsetzeinrichtung sind verschiedenartige Zug- und Schubeinrichtungen bekannt. Neben Rangierlokomotiven oder werkseigenen lokomotiven sind auch Schleppzüge in Form von Seilzügen bekannt, die von der Anlage her sehr aufwendig sind.

Der Einsatz von Gabelstaplern und von fahrbaren Containerumschlaggeräten ist oftmals aus Platzmangel oder wegen Fehlens eines befahrbaren Untergrundes nicht möglich, und wenn, dann sind derartige Einrichtungen Kosten- und personalintensiv.

Durch die CH-A 395 858 ist eine Einrichtung zum Fördern und Abstellen von Behältern, insbesondere von Wagenkasten, bekannt, die insbesondere für Betriebe, die Straßen- und Schienenfahrzeuge mit abnehmbaren Wagenkästen verwenden, geeignet. Diese Einrichtung weist eine Bodenförderanlage zum Transport des Fördergutes, nämlich der Wagenkästen, sowie ein angeschlossenes Lagergebäude auf, welches Mittel zum Weiterbefördern des Transportgutes innerhalb des Gebäudes und zum Verteilen und Abstellen des Gutes besitzt. Die bei dieser Einrichtung eingesetzte Bodenförderanlage umfaßt eine Umsetzanlage, die mit vier Hebesäulen ausgerüstet ist, die elektrisch oder pneumatisch betätigbar sind und zum Abheben der Wagenkasten von den Laufwerken dienen, die nach Abnahme der Wagenkasten wieder zur Weiterverwendung gelangen oder auf einem Abstellgleis abgestellt werden, und aus einer Fördereinrichtung, die mit zwei Rollenkanälen versehen ist, die im Boden zwischen den Gleisen für die Fahrzeuge eingelassen sind und zur Aufnahme von sich frei drehenden Laufrollen dienen. Diese Laufrollen sind in den bodenseitigen Kanälen etwas versenkt angeordnet und bewerkstelligen die Förderung der Wagenkasten, welche mit ihren Längsträgern auf den Rollen abgestützt werden, wobei die über die Rollen vorstehenden Seitenwände der Kanäle die Längsführung für den Wagenkasten bilden. Zwischen den Rollen sind Abdeckleisten vorhanden, welche das Überfahren der Rollenkanäle mit pneubereiften Fahrzeugen ermöglichen.

Zum Transport der Wagenkästen ist ein Kettenförderer vorgesehen, welcher aus einer endlos geführten Kette mit einem Mitnehmer besteht. Diese endlos geführte Kette ist in der Mitte zwischen den Gleisen bzw. den Kanälen für die Wagenkastentransportrollen angeordnet und über Umlenkrollen geführt, die in der vertikalen Mittelebene zwischen den besagten Kanälen umlaufend angetrieben sind. Der an der Kette befestigte Mitnehmer ist einendseitig mit Laufrollen ausgerüstet und greift vermittels eines Halters in die Kette ein, wohingegen das andere Ende des Mitnehmers als Kopplungsarm an dem zu transportierenden Wagenkasten befestigt wird, so daß zwischen dem Wagenkasten und der Kette eine kraftschlüssige Verbindung entsteht.

Eine Einrichtung zum Fördern und Abstellen von Behältern mit einer derart ausgebildeten Bodenförderanlage ist konstruktiv sehr aufwendig, da im Bodenbereich zwischen den Schienen für die Gleisfahrzeuge Kanäle für die Aufnahme der Wagenkastentransportrollen und der Transportkette ausgebildet sein müssen, was die Schaffung entsprechend ausgebildeter Fundamente erfordert, so daß eine derartige Bodenförderanlage nur mit einem hohen Kostenaufwand nachträglich in bestehende Gleisanlagen eingebaut werden kann. Hinzu kommt, daß durch die Führung der Fördereinrichtung im Boden zwischen den Gleisen kein begehbarer Bereich erhalten wird; der Bereich zwischen den beiden Schienen für das Gleisfahrzeug ist für Bedienungs- und Rangierpersonal nicht begehbar. Außerdem ist die gesamte Einrichtung konstruktiv nur für solche Schienenfahrzeuge ausgelegt, bei denen die Wagenkästen so ausgebildet sind, daß diese mit den Längsträgern auf den Lauf- und Transportrollen der Bodenförderanlage aufliegen. Lastwagenaufbauten, die nicht mit den nötigen Einrichtungen eines Wechselfahrzeuges ausgerüstet sind, können in dieser Einrichtung nur eingesetzt werden, wenn eine zusätzliche Hilfsbrücke aus zwei Längsträgern mit ausschwenkbaren Verbindungsstreben verwendet wird.

Die DE-AZ 1 147 528 betrifft einen Förderbandzug, bei dem jeder Bandzug auf Tragschienen laufend mit einem Eigenantrieb versehen ist und mittels eines Reibradantriebes fortbewegt wird, der zangenartig an einer von den Tragschienen gesondert angeordneten Zugschiene angreift, die als ortsfestes Seil dient. Auf dieser Tragschiene ist ein Antriebswagen mit einer Antriebseinrichtung in Form eines Motors angeordnet, über den eine Seilscheibe angetrieben wird, um welche das Seil mit Hilfe von zwei Spannrollen geschlungen ist. Die Seilscheibe ist dabei mit einer keilförmigen Nut versehen so daß der Antriebswagen sich zur Drehung der Seilscheibe mittels des Antriebes des Antriebswagens an dem fest gespannten Seil fortbewegen kann. Die Aufgabe der Spannrollen haben dabei den Zweck, den Umschlingungswinkel des Seiles zu vergrößern. Ein derart ausgebildeter Förderbandzug ermöglicht das selbsttätige Bewegen eines Antriebswagens entlang des Seiles vermittels der antriebswagenseitig vorgesehenen motorangetriebenen Seilscheibe. Dieser Förderbandzug ist ausschließlich für den Antrieb eines Antriebswagens auf einer Tragschiene vorgesehen, wobei dieser Antriebswagen mit einem Tragwagen verbunden ist, wobei die Gesamtanordnung jedoch nicht so ausgebildet ist, um den Antriebswagen an ein Gleisfahrzeug ankoppeln zu können, um das Gleisfahrzeug in den Bereich einer Umsetzanlage für Transportgut des Gleisfahrzeuges bewegen zu können.

Die Erfindung löst die Aufgabe, eine Anlage der eingangs genannten Art zu schaffen, mit der insbesondere im innerbetrieblichen Bereich kosten- und personalsparend ein Umsetzen von Transportgut, wie z.B Containern, bei gleichzeitigem, wirtschaftlichem Verholen oder Verfahren der Transportfahrzeuge im Umsetzbereich möglich ist, die ohne großen Kostenaufwand in bestehende Gleisanlagen einbaubar ist und die ein ungehindertes Begehen zwischen den Schienen des Gleises ermöglicht, wobei die dabei verwendete Waggonpositionierungseinrichtung gegebenenfalls auch für sich allein überall dort einsetzbar ist, wo insbesondere gleisgebundene Fahrzeuge ohne Zuhilfenahme gesonderter und bekannter aufwendiger Einrichtungen verfahren werden sollen, wobei mittels der Anlage die Ware bzw. das Füllgut nicht in die Transportbehälter, wie Container, gebracht, sondern der Container zum Belade- bzw. Füllort transportiert wird, so daß eine erhebliche Kostensenkung, insbesondere im innerbetrieblichen Transport, erfolgt.

Diese Aufgabe wird durch die Patentanspruch 1 gekennzeichneten Merkmale gelöst.

Aufgrund des Zusammenwirkens der Containerhebeeinrichtung und der Waggonpositioniereinrichtung ist es möglich, auf Waggons ankommende Transportbehälter, wie Container, auf andere ortsbewegliche Ladeflächen umzusetzen, wobei das Verfahren und Verschieben des Waggons mittels der besonders ausgebildeten Positionierungseinrichtung erfolgt, die aus Schlepp- und Positionierungsschlitten ausgebildet ist, mit dem der zu verfahrende Waggon vermittels seines Seilhakens manuell oder automatisch gekoppelt, d.h. verbunden, wird, wobei der Schlepp- und Positionierungsschlitten parallel zum Gleis mittels elektrischer oder anderer geeigneter Antriebseinrichungen auf einer Führungsschiene verfahrbar ist, wodurch die Möglichkeit gegeben ist, den mit dem Schlepp- und Positionierungsschlitten verbundenen Waggon genauestens zu positionieren; d.h. derart zu positionieren, dar die Hebeeinrichtung der Containerhubvorrichtung das umzusetzende Transportgut, wie Container, mühelos erfaßt, und zwar in denjenigen Bereichen erfassen kann, die für das Erfassen von Hubarmen vorgesehen sind. Dabei ist die Hubvorrichtung für das Anheben und Absenken der Container ortsfest angeordnet, so daß vermittels des Schlepp- und Positionierungsschlittens der Waggon mit dem umzusetzenden oder aufzusetzenden Transportgut in die Hubvorrichtung eingefahren werden kann, und zwar derart, daß gleichzeitig eine Positionierung des Waggons und damit auch gleichzeitig des Transportgutes, d.h. des Containers, vorgenommen wird, um den Container mittels der Hubvorrichtung zu erfassen, anzuheben, um daraufhin dann das gleisgebundene Transportfahrzeug zu verfahren und um dann den angehobenen Container wieder auf die Ladefläche eines anderweitigen, in den Bereich der Hubvorrichtung gebrachten Transportfahrzeuges, z.B. auf ein Fluförderfahrzeug, abzusetzen, um den Container einer Füll- oder Entleerungsstation zuführen zu können.

Die Waggonpositionierungseinrichtung kann überall dort eingesetzt werden, wo gleisgebundene Fahrzeuge verschoben werden oder positioniert werden müssen, und zwar nicht nur im Zusammenhang mit Containerumsetzvorrichtungen, sondern auch überall dort, wo Waggons, z.B. auf einer Beladestation, zugeführt werden sollen. Im Zusammenwirken der Waggonpositioniereinrichtung mit der Containerumsetzeinrichtung bietet sich die Gesamtanlage auch für den Einsatz in solchen Gegenden an, die nicht stark frequentiert sind, z.B. bei entlegenen Bahnhöfen oder Güterbahnhöfen, die mit Neben- und Abstellgleisen versehen sind.

Hinzu kommt die weitere Möglichkeit, einen vermehrten Transport von Containern auf gleisgebundenen Fahrzeugen vorzunehmen, da mit der erfindungsgemäßen Anlage die Möglichkeit gegeben ist, die Container auf andere Transportmittel umzusetzen, um vermittels dieser Transportmittel, z.B. Lastkraftfahrzeuge, dann die beladenen Container dem Bestimmungsort zuzuführen, wodurch der Verkehr auf der Straße entlastet wird.

Die Antriebseinrichtung für den Schlepp- und Positionierungsschlitten besteht aus einem Kettentrieb, einer Antriebsspindel, Zahnstangentrieb, elektromagnetischem Linearantrieb, Seilantrieb, einem hydraulischen oder einem als Brennkraftmaschine ausgebildeten Antrieb, die Antriebseinrichtung für den Schlepp- und Positionierungsschlitten ist vorzugsweise als Kettenantrieb ausgebildet, der aus einer an der Führungsschiene für den Schlepp- und Positionierungsschlitten in Führungsschienenlängsrichtung verlaufenden; gespannten, endseitig befestigten und zwischen den Endbefestigungspunkten über die gesamte Kettenlänge sich erstreckenden, lose an der Führungsschiene anliegenden Kette und einem an dem Schlepp- und Positionierungsschlitten angetriebenen, in die Glieder der Kette eingreifenden Kettenrad besteht, so daß vermittels des angetriebenen Kettenrades der Schlepp- und Positionierungsschlitten sich an der Kette entlang bewegt.

Das Gehäuse des Schlepp- und Positionierungsschlittens weist in seinem der Kette zugekehrten Bereich zwei Umlenkrollen zur Führung der Kette um das in dem Innenraum des Gehäuses liegende Kettenrad auf. Die Kette ist auf der Führungsschiene in ihren beiden Endbereichen unter Zwischenschaltung von Federelementen, wie z.B. Tellerfedern od.dgl., im vorgespannten Zustand gehalten, wobei die freien Enden der Kette im Anschluß an die Federelemente in Gleitstäbe übergehen, die in Hülsen frei verschieblich gehalten sind, wobei am außenliegenden Ende einer jeden Führungshülse ein Überwachungsorgan angeordnet ist, das als Näherungsinitiator, licht-optischer Sensor od.dgl. ausgebildet ist und das über eine Steuereinrichtung mit einer in dem Gehäuse des Schlepp- und Positionierungsschlittens angeordneten Bremseinrichtung verbunden ist, vermittels der ein Abbremsen der Fahrbewegung des Schlepp- und Positionierungsschlittens bei mangelndem Betriebszustand des Antriebes, z.B. Reißen der Kette od.dgl. für den Schlepp- und Positionierungsschlitten bewirkbar ist.

Der Kopplungsarm des Schlepp- und Positionierungsschlittens ist mit Steuerfühlern, wie Sensoren, Näherungsinitiatoren od.dgl. zum Anhalten und Ausrichten des Schlepp- und Positionierungsschlittens im Seilhakenbereich des Transportfahrzeuges versehen, wobei die Kopplung des Kopplungsarmes mit dem Fahrzeugseilhaken mittels Bolzen oder über Antriebseinrichtungen betätigbare Klauen od.dgl. erfolgt.

Die Bremseinrichtung des Schlepp- und Positionierungsschlittens besteht aus mit der Führungsschiene wirksam werdenden mechanischen oder magnetischen Bremsbacken, Bremskeilen od.dgl.

Die Erfindung sieht ferner vor, daß die Führungsschiene für den Schlepp- und Positionierungsschlitten als Doppel-T-Träger ausgebildet ist und daß die Kette auf dem oberen waagerechten Flansch der Führungsschiene angeordnet ist, während dagegen der Schlepp- und Positionierungsschlitten aus einem die Führungsschiene beidseitig übergreifenden Gehäuse besteht; in dem das Kettenrad mit der Antriebseinrichtung für das Kettenrad angeordnet ist, wobei das Gehäuse in seinem oberen Bereich mit einem Paar oder mit zwei Paar Laufrädern und mit je zwei Führungsrollen zu beiden Seiten des Steges der Führungsschiene versehen ist, vermittels derer sich der Schlepp- und Positionierungsschlitten an der Unterseite des oberen Flansches der Führungsschiene abstützt.

Nach einer weiteren Ausführungsform der Erfindung ist im Bereich der beiden Hubsäulen ein Steuerfühler für den Schlepp- und Positionierungsschlitten so angeordnet, daß bei einem Beaufschlagen des Steuerfühlers durch den Schlepp- und Positionierungsschlitten dieser mit dem Transportfahrzeug in einer Position zum Stehen gebracht wird, wobei die Tragarme in den Untergreifbereich des Transportgutes fahrbar sind.

Weitere vorteilhafte Ausgestaltungen der Erfindung sind in den Unteransprüchen gekennzeichnet.

Im folgenden wird der Gegenstand der Erfindung in den Zeichnungen näher erläutert. Es zeigt

Fig. 1 in einer schematischen schaubildlichen Ansicht die Gesamtanlage zum Umsetzen von Transportgut in Verbindung mit einer Waggon-Schlepp- und- positionierungsvorrichtung;

Fig. 2 in einer Ansicht von oben die Anlage,

Fig. 3 in einer Seitenansicht eine Hubsäule der Hubvorrichtung der Anlage,

Fig. 4 in einer Seitenansicht einen Abschnitt der Führungsschiene mit dem Schlepp- und Positionierungsschlitten der Schlepp- und Positionierungsvorrichtung für Waggons;

Fig. 5 in einer Seitenansicht eine Führungsschiene mit auf dieser angeordneten Kette des Kettenantriebes für den Schlepp- und Positionierungsschlitten.

Fig. 6 in einer Seitenansicht eine Ausführungsform einer Endbefestigung der Kette des Kettentriebes für den Schlepp- und Positionierungsschlitten.

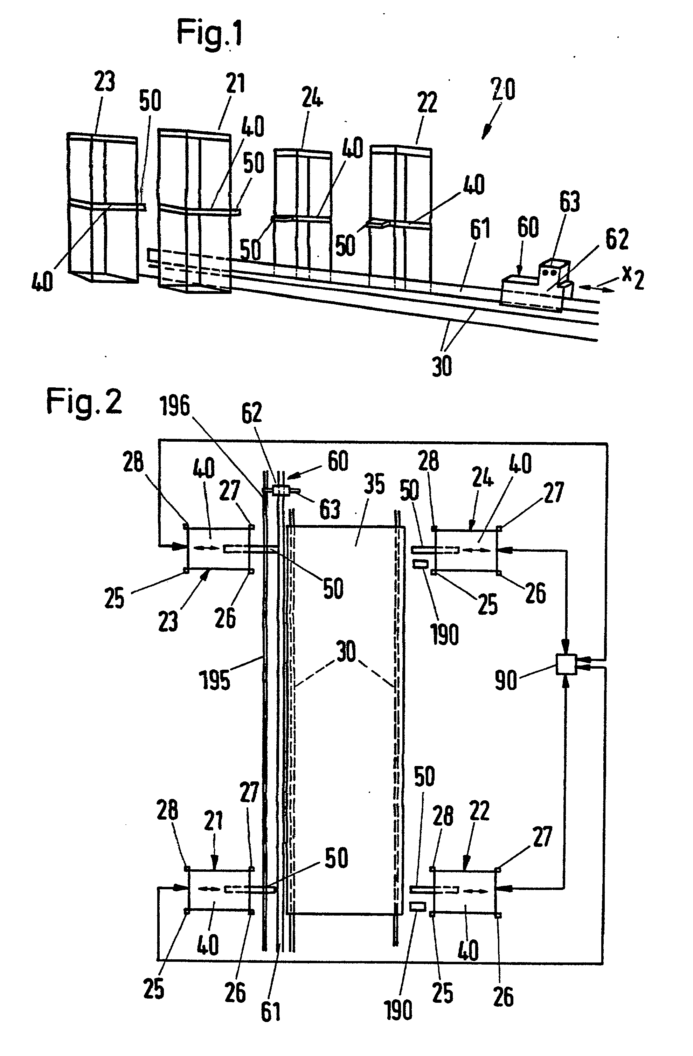

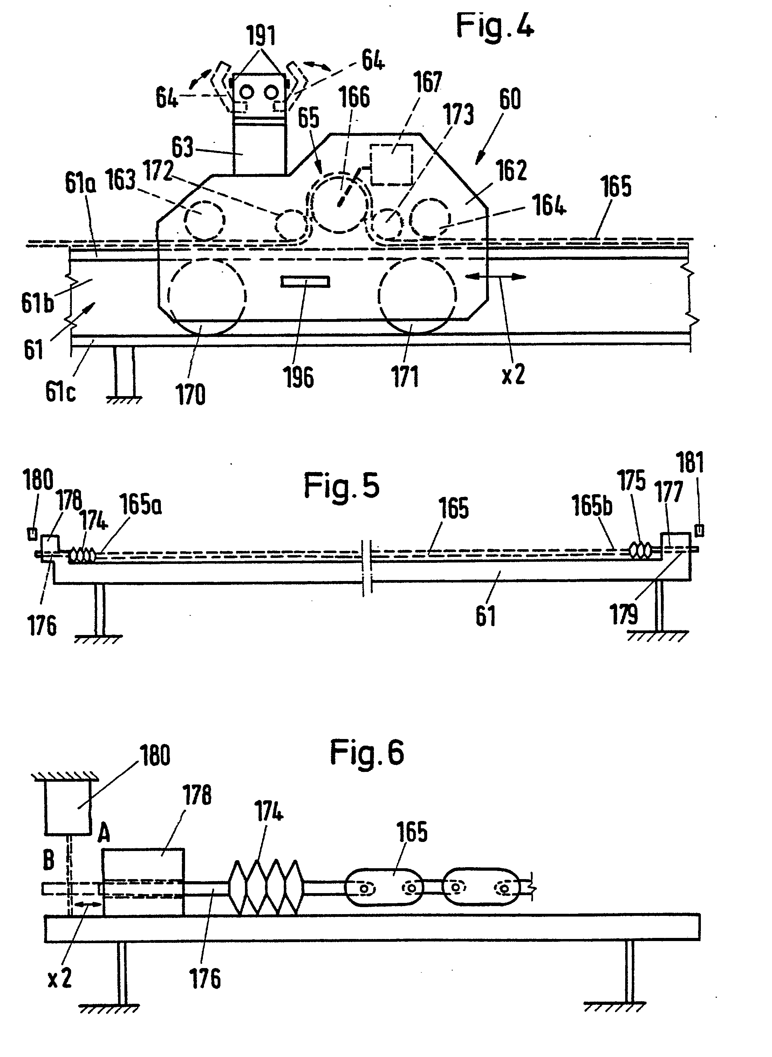

Die in Fig. 1 und 2 dargestellte Anlage zum Umsetzen von Behältern und zum Positionieren von Eisenbahnfahrzeugen besteht aus einer Hubvorrichtung 20 und einer Schlepp- und Positionierungsvorrichtung 60, wobei im Bereich der beiden Vorrichtungen 20/60 ein mit 30 bezeichnetes Fahrzeuggleis für ein bei 35 angedeutetes Fahrzeug (Fig. 2) vorgesehen ist, dessen Rahmen bei 36 angedeutet ist, an dem in an sich bekannter Weise ein in Fig. 4· dargestellter Seilhaken 37 befestigt ist.

Die Hubvorrichtung 20 besteht aus vier Hubsäulen 21, 22, 23, 24, die paarweise zusammengefaßt sind, wobei je zwei Hubsäulen auf der einen Seite des Fahrzeuggleises 30 und die beiden anderen Hubsäulen auf der anderen Seite des Fahrzeuggleises 30 angeordnet sind. Bei dem in Fig. 1 und 2 gezeigten Ausführungsbeispiel sind auf der einen Seite des Gleises 30 die Hubsäulen 21, 23 und auf der anderen Seite des Gleises die Hubsäulen 22, 24 angeordnet, und zwar derart, daß die Hubsäulen 21, 22 und die Hubsäulen 23, 24 einander zugekehrt sind. Die vier Hubsäulen 21, 22, 23, 24 sind ortsfest angeordnet; sie können jedoch auch auf einer Tragplatte gemeinsam befestigt sein.

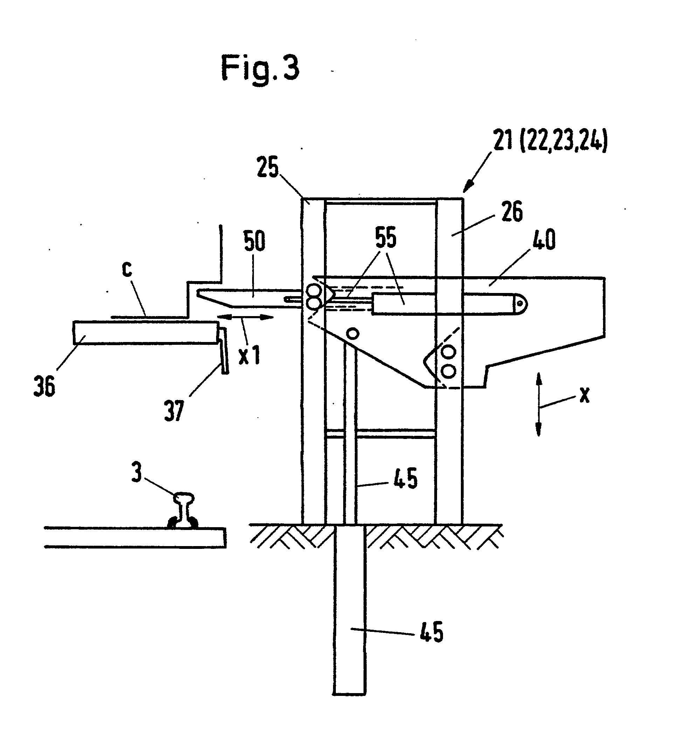

Da jede Hubsäule 21 bis 24 gleich ausgebildet ist, wird nachstehend anhand der Fig. 3 die Hubsäule 21 näher beschrieben.

Die Hubsäule 21 besteht aus vier senkrechtstehenden Führungsholmen 25, 26, 27, 28, die sich zu einer quadratischen oder rechteckförmigen Grundfläche ergänzen. Diese Führungsholme 25 bis 28 dienen zur Aufnahme einer in Pfeilrichtung X senkrecht verfahrbaren Hubbühne, Hubplattform oder eines Hubschlittens 40, wobei die Verfahrbarkeit des Hubschlittens 40 mittels einer bei 45 angedeuteten Antriebseinrichtung erfolgt (Fig. 3). Der Hubschlitten 40, der z.B. plattformartig ausgebildet sein kann, weist an den den Führungsholmen 25 bis 27 zugekehrten Seitenwänden Führungsrollen auf, die in entsprechenden Führungen der Führungsholme 25, 28 derart geführt sind, daß ein Abheben der Führungsrollen aus den Führungen der Führungsholme 25 bis 28 nicht möglich ist. Hinzu kommt, daß auf jeder Seite des Hubschlittens 40 die Führungsrollen für die Führungsholme derart zueinander versetzt angeordnet sind, daß ein Verkanten des Hubschlittens 40 vermieden wird. Die Anordnung der Führungsrollen an dem Hubschlitten 40 erfolgt in etwa wie in Fig. 3 dargestellt.

Als Antriebseinrichtung 45 für das senkrechte Verfahren des Hubschlittens 40 kann, wie in Fig. 3 dargestellt, ein hydraulischer Arbeitszylinder Verwendung finden, der, wenn kein ausreichender Platz zur Verfügung steht, teleskopartig ausgebildet sein kann. Jedoch besteht auch die Möglichkeit, einen Teil des Arbeitszylinders unter die Standfläche für die Hubvorrichtung 20, d.h. für die Hubsäulen 21 bis 24, zu verlegen.

Jedoch auch anders ausgebildete Antriebseinrichtungen können zur Anwendung gelangen, wie z.B. neben hydraulischen Antriebseinrichtungen auch druckluftbetriebene Antriebseinrichtungen, elektromotorische Antriebe oder auch solche Antriebe, die mittels Brennkraftmaschinen betrieben werden. Daneben besteht auch die Möglichkeit, die senkrechte Verfahrbarkeit des Hubschlittens 40 mittels Seilzügen und einer entsprechenden Antriebseinrichtung vorzunehmen.

Der Hubschlitten 40 einer jeden Hubsäule 21 bis 24 weist ferner einen waagerechten Tragarm 50 auf, der in Pfeilrichtung X1 ein- und ausfahrbar ist. Für das Ein- und Ausfahren des Tragarmes 50 ist eine Antriebseinrichtung 55 vorgesehen, die auch als hydraulischer oder druckluftbetriebener Arbeitszylinder ausgebildet sein kann. Jedoch auch andere geeignete Antriebseinrichtungen können zur Anwendung gelangen. Sowohl die Antriebseinrichtung 45 für die Hubschlitten 40 als auch die Antriebseinrichtungen 55 für die Tragarme 50 sind über ein Steuerelement derart miteinander verbunden, daß alle Bewegungsabläufe gleichzeitig verlaufen. Die Länge der ein- und ausfahrbaren Tragarme 50 aller vier Hubsäulen 21 bis 24 ist so bemessen, daß im ausgefahrenen Zustand der Tragarme 50 diese den auf einer Ladefläche eines Fahrzeuges angeordneten Container 30 unterfassen, anheben und auf eine andere Ladefläche eines Transportfahrzeuges absetzen können, das in die Hubvorrichtung 20 eingefahren worden ist, nachdem das gleisgebundene Fahrzeug, wie Waggon od.dgl., von dem der Container abgenommen worden ist, aus der Hubvorrichtung 20 herausgefahren worden ist, aus der Hubvorrichtung herausgefahren worden ist. Dieses Ein- und Ausfahren des gleisgebundenen Fahrzeuges erfolgt mittels der nachstehend näher beschriebenen Schlepp- und Positionierungsvorrichtung 60.

In Fig. 2 ist bei 90 eine Steuereinrichtung angedeutet.

In dieser Steuereinrichtung 90 sind die einzelnen Arbeitsabläufe der Hubschlitten 40 und der Tragarme 50 der Hubsäulen 21 bis 24 und des Schlepp- und Positionierungsschlittens 62 derart zusammengeführt, daß das mit dem Schlepp- und Positionierungsschlitten 62 gekoppelte Gleisfahrzeug 35 von dem Schlepp- und Positionierungsschlitten 62 in den Bereich der Hubsäulen 21, 22, 23, 24, d.h. zwischen die jeweiligen Hubsäulenpaare, verfahren wird, worauf dann die Tragarme 50 im eingezogenen Zustand aus einer z.B. höher gelegenen Position bis in den Tragarmuntergreifbereich an dem Container mittels der Hubschlitten 40 abgesenkt und zum Untergreifen des Transportgutes, also des Containers C, ausgefahren werden, worauf dann die Tragarme zusammen mit dem Transportgut angehoben werden. Der Waggon, dem der Container C entnommen worden ist, wird dann mittels des Schlepp- und Positionierungsschlittens 62 aus dem Bereich der Hubeinrichtung 20 herausgefahren und unter das angehobene Transportgut wird dann eine ortsbewegliche Lade- oder Abstellfläche z.B. eines betriebseigenen Fahrzeuges, wie Lastkraftwagen od.dgl., gebracht.

Auf die Lade-fläche dieses Fahrzeuges wird dann das Transportgut durch Absenken der Tragarme 50 abgesenkt und auf die Ladefläche abgesetzt, so daß dann das mit dem Container beladene Fahrzeug aus dem Bereich der Hubvorrichtung 20 herausgefahren werden kann-

Die Schlepp- und Positionierungsvorrichtung 60 besteht aus einem auf einer Führungsschiene 61 in Führungsschienenlängsrichtung verfahrbaren Schlepp- und Positionierungsschlitten 62 (Fig. 2 und 4). Bei dem in Fig. 4 gezeigten Ausführungsbeispiel ist die Führungsschiene 61 als Doppel-T-Träger ausgebildet, dessen oberer Flansch mit 61a und dessen Steg mit 61b bezeichnet sind. Diese Füh-

rungsschiene 61, die jedoch auch ein anderes Querschnittsprofil aufweisen kann, ist in einem Abstand und parallel zu dem Gleis 30 angeordnet.

Das Verfahren des Schlepp- und Positionierungsschlittens 62 auf der Führungsschiene 61 erfolgt mittels einer Antriebseinrichtung 65. Diese Antriebseinrichtung 65 für den Schlepp- und Positionierungsschlitten 62 besteht aus einem Kettentrieb, einer Antriebsspindel, einem Zahnstangentrieb, einem elektromagnetischen Linearantrieb, einem Seilantrieb, einem hydraulischen oder einem brennkraftmaschinenbetriebenen Antrieb.

Bei dem in Fig. 4 gezeigten Ausführungsbeispiel ist für den Schlepp- und Positionierungsschlitten 62 ein Kettenantrieb vorgesehen. Dieser Kettenantrieb besteht aus einer an der Führungsschiene 61 für den Schlepp- und Positionierungsschlitten 62 in Führungsschienenlängsrichtung verlaufenden, gespannten, d.h. vorgespannten, Kette 165, die mit ihren Enden an der Führungsschiene 61 befestigt ist. Die Kette 165 liegt dabei auf dem Flansch 61a der Führungsschiene 61, und zwar mittig, d.h. also über den Steg 61b der Führungsschiene 61, auf. Die Länge der Führungsschiene 61 kann beliebig gewählt sein; sie wird sich jeweils nach der Länge des erforderlichen und gewünschten Verschiebeweges richten. Im Bereich zwischen den beiden Endbefestigungspunkten 165a, 65b der Kette 165 liegt die Kette lose auf dem Flansch 61a der Führungsschiene 61 auf.

Der Schlepp- und Positionierungsschlitten 62 besteht aus einem Gehäuse 162, welches beidseitig die Führungsschiene 61 umgreift. Für die Verfahrbarkeit des Schlepp- und Positionierungsschlittens 62 ist das Gehäuse in seinem oberen Bereich mit vier Laufrädern versehen, von denen in Fig. 4 die Laufräder 163, 164 sichtbar dargestellt sind. Vermittels dieser Laufräder 163, 164 stützt sich das Gehäuse 162 des Schlepp- und Positionierungsschlittens 62 auf dem oberen Flansch 61a der Führungsschiene 61 ab. Die vier Laufräder 163, 164 sind dabei so angeordnet, daß je zwei Laufräder zu beiden Seiten der durch das Gehäuse 162 laufenden Kette 165 des Kettenantriebes liegen. Um zu verhindern, daß sich das Gehäuse 162 von der Führungsschiene 61 abhebt oder sich verkantet, weist das Gehäuse 162 weitere Führungsrollen 170, 171 auf, die entweder so bemessen sind, daß sich diese an der Unterseite des oberen Flansches 61a der Führungsschiene 61 abstützen oder so bemessen sind, daß sich diese Führungsrollen 170, 171 sowohl am oberen Flansch 61a als auch am unteren Flansch 61c der Führungsschiene 61 abstützen- Das Gehäuse 162 weist dabei vier Führungsrollen auf, von denen jedoch in Fig. 4 nur die Führungsrollen 170, 171 sichtbar dargestellt sind. Je zwei Führungsrollen sind zu beiden Seiten des Steges 61b der Führungsschiene 61 angeordnet. Diese Führungsrollen 170, 171 sind freifliegend gelagert, was auch für die Laufräder 163, 164 zutrifft, die als Spurkranzräder ausgebildet sein können.

Die Kette 165 wird über Umlenkrollen 172, 173, wie in Fig. 4 dargestellt, in den Innenraum des Gehäuses 162 geleitet, und zwar über ein in dem Innenraum des Gehäuses 162 angeordnetes Kettenrad 166, das als Kettennuß ausgebildet und das mit einem Antrieb 167 verbunden ist. Bei diesem Antrieb 167 handelt es sich um einen elektromotorischen Antrieb. Die Stromzufuhr erfolgt über einen an dem Gehäuse 162 vorgesehenen Stromabnehmer 196, der mit einer Stromzuführungsschiene 195 in Wirkverbindung steht, die parallel zu der Führungsschiene 61 angeordnet ist. Aufgrund der Verwendung einer Stromzuführungsschiene 19 entfallen kabelartige Stromzuführungsleitungen. Die Stromzuführungsschiene kann auch integrierter Bestandteil der Führungsschiene 61 sein.

Aufgrund des verwendeten Kettenantriebes, bestehend aus der Kette 165 und dem angetriebenen Kettenrad 166, bewegt sich bei Inbetriebnahme des Antriebsmotors 167 der Schlepp- und Positionierungsschlitten 62 selbsttätig entlang der Führungsschiene 61, d.h. der Schlitten 62 läuft an der Kette 165 in Pfeilrichtung X2 ab.

Die Kette 165 ist auf der Führungsschiene 61 in ihren beiden Endbereichen 165a, 165b unter Zwischenschaltung von Federelementen, wie z.B. Tellerfedern od.dgl. 174, 175 im vorgespannten Zustand gehalten, wobei nach einer bevorzugten Ausführungsform gemäß Fig. 6 die freien Enden der Kette 165 im Anschluß an die Federelemente in Gleitstäbe 176, 177 übergehen, die in ortsfesten Hülsen 178, 179 frei verschieblich gehalten sind, wobei diese Hülsen an der Führungsschiene 61 befestigt sein können. Im Anschlußbereich einer jeden Führungshülse 178 bzw. 179 ist ein Überwachungsorgan 180 bzw. 181 angeordnet, das z.B. als Näherungsinitiator, licht-optischer Sensor od.dgl. ausgebildet sein kann und mit dem die Bewegungsbahn der Gleitstäbe 176 bzw. 177 überwacht wird. Im Betriebszustand der Anlage nimmt die Kette 165 im vorgespannten Zustand die in Fig- 6 gezeigte Position ein. Sollte durch einen Umstand die Kette 165 reißen, dann gleiten die Gleitstäbe 170, 177 in Pfeilrichtung X2 von der Position A in die Position B und unterbrechen dabei gleichzeitig den Überwachungsstrahl des Überwachungsorgans 180 bzw. 181, wobei dann vom Überwachungsorgan aus einer Steuereinrichtung betätigt wird, über die eine in der Zeichnung nicht dargestellte Bremseinrichtung in dem Gehäuse 162 des Schlepp- und Positionierungsschlittens 62 wirksam wird, vermittels der ein Abbremsen der Fahrbewegung des Schlepp- und Positionierungsschlittens 62 bewirkt wird. Die Bremseinrichtung des Schlepp- und Positionierungsschlittens 62 besteht z.B. aus mit der Führungsschiene 61 wirksam werdenden mechanischen oder magnetischen Bremsbacken, Bremskeilen od.dgl., die i.s. über betätigbare Elektromagnete wirksam werden und die eine weitere Bewegung des Schlepp- und Positionierungsschlittens 62 verhindern, wodurch vermieden wird, daß der mit dem Schleppund Positionierungsschlitten 62 gekoppelte Waggon ins Rollen kommt und nicht mehr angehalten werden Kann. Eine derartige Sicherheitseinrichtung ist daher besonders vorteilhaft.

Die im Endbereich der Kette 165 angeordneten Federelemente, wie z.B. Tellerfedern od. dgl. 174, 175, dienen zum Abbremsen der Auflaufbewegung des mit dem Schlepp- und Positionierungsschlitten 62 zu koppelnden Waggons, und zwar im Augenblick des Kopplungsvorganges, worauf nachstehend noch näher eingegangen wird. Vermittels der Federelemente 174, 175 wird die Auflaufbewegung des zu koppelnden Waggons während des Koppelungszustandes mit dem Schlepp- und Positionierungsschlitten gemindert, d.h. abgebremst, so daß es in keiner Weise zu einer Kettenbelastung kommen Kann.

Um den Schlepp- und Positionierungsschlitten 62 mit dem Seilhaken 37 eines Waggons koppeln zu können, weist der Schlepp- und Positionierungsschlitten 62 einen Kopplungsarm 63 auf (Fig. 4). Der Kopplungsarm 63 ist derart an dem Gehäuse 162 des Schleppund Positionierungsschlittens 62 angeordnet und so ausgebildet, daß entweder bei einem Heranbewegen des Schlittens 62 an den zu koppelnden Waggon oder bei einem Heranbewegen des Waggons an den Kopplungsarm 63 zu Koppelungszwecken der Kopplungsarm 63 mit seinem freien Ende in den Bereich des Seilhakens 37 des Waggons gebracht wird und bei Erreichen dieser Position die Kopplung vermittels an dem oberen freien Ende des Kopplungsarmes 63 vorgesehener Seilhakenverschlußelemente 64 erfolgt, wobei es sich bei diesen Elementen 64 um rein mechanische Elemente, z.B. um Einsteckbolzen, handelt, die von Hand oder mittels elektromagnetischer Antriebe betätigbar sind, jedoch auch eine vollautomatische Ausgestaltung dieser Seilhakenverschlußelemente 64 kann vorgesehen sein.

Das Seilhakenverschlußelement 64 ist dann klauenförmig ausgebildet und über mechanische oder elektrisch gesteuerte Fühler werden diese klauenartig ausgebildeten Seilhakenverschlußelemente an beiden Seiten des Seilhakens 37 zur Anlage gebracht und dann derart betätigt, daß ein Einrasten in den Seilhaken 37 bzw. ein Umfassen des Seilhakens 37 erfolgt, so daß eine feste, jedoch lösbare Verbindung zwischen dem Schlepp- und Positionierungsschlitten 62 mit dem Waggon erfolgt. Ist der Waggon an den Schlepp- und Positionierungsschlitten 62 angekoppelt, dann wird durch die Fahrbewegung des Schlepp- und Positionierungsschlittens 62 der Waggon in die erforderliche Position, d.h. in die Hubvorrichtung 20, bewegt, damit dann dort der auf dem Waggon stehende Container abgenommen und umgesetzt bzw. auf eine andere in den Bereich der Hubvorrichtung 20 gebrachte Ladefläche abgesetzt werden kann. Die genaue Positionierung des Kopplungsarmes 62 an dem Seilhaken 37 eines Waggons kann mittels mechanischer oder elektrisch betriebener Mittel und Einrichtungen erfolgen, wobei auch entsprechend ausgebildete Sensoren zum Einsatz gelangen können. Auch licht-optisch ausgebildete Fühler können eingesetzt werden. Auch das Entkoppeln erfolgt automatisch, d.h. selbsttätig, bei Erteilung entsprechender Steuersignale an die Antriebselemente, über die die Seilhakenverschlußelemente 62 betätigt werden. Ein entsprechender, im Bereich des Kopplungsarmes 62 angeordneter Steuerfühler ist in Fig. 4 bei 191 angedeutet. Ein derartiger Steuerfühler kann auch z.B. als Näherungsinitiator in an sich bekannter Weise ausgebildet sein. Die Gesamtsteuerung der Anlage erfolgt von einem in der Zeichnung nicht dargestellten Bedienungsstand aus.

Zur Positionierung des Schlepp- und Positionierungsschlittens 62, z.B. im Bereich der Hubvorrichtung 20, sind an der Führungsschiene 61 in der Zeichnung nicht dargestellte Endschalter vorgesehen, über die bei Beaufschlagung durch den Schlitten 62 die weitere Fahrbewegung des Schlittens unterbrochen wird. Diese Endschalter sind auf der Führungsschiene 61 verschiebbar angeordnet, so daß von vornherein der Fahrweg des Schlittens 62 und die genaue Position festgelegt werden kann, in der der Schlepp- und Positionierungsschlitten 62 zum Halten gebracht werden muß, damit der mit dem Container versehene und zu entladende Waggon so zwischen den Hubsäulen 21 bis 24 der Hubvorrichtung 20 angeordnet ist, daß die Tragarme 50 der Hubschlitten 40 unter den Container greifen und diesen anheben können.

**Patentansprüche**

1. Anlage zum Umsetzen von Transportgut, insbesondere von Behältern, wie Containern, von in einer Richtung sich bewegenden Transportmitteln, insbesondere Eisenbahnfahrzeugen mit an dem Fahrzeugrahmen vorgesehenen Seilhaken (37) auf ortsbewegliche Abstellflächen, insbesondere Lastkraftwagen, schienengebundene Fahrzeuge, auch für den innerbetrieblichen Transport u.dgl., unter Verwendung einer Positionierungeinrichtung für die Positionierung der Eisenbahnfahrzeuge im Umsetzbereich, wobei die Anlage aus einer ortsfesten, hydraulischen oder mittels anderer geeigneter Antriebseinrichtungen angetriebenen Hubvorrichtung (20) für das Transportgut (C) mit vier Hubsäulen (21, 22, 23, 24) besteht, von denen jeweils zwei Hubsäulen (21, 23; 22, 24) auf jeder Seite des Fahrzeuggleises (30) im Abstand voneinander angeordnet sind und die Hubsäulen (21, 23) der einen Seite der Hubvorrichtung (20) den Hubsäulen (22, 24) der anderen Seite gegenüberliegend sind, wobei jede Hubsäule (21, 22, 23, 24) aus vier sich zu einer quadratischen oder rechteckförmigen Grundfläche ergänzenden, senkrechten Führungsholmen (25, 26, 27, 28) und einem in den Führungsholmen (25, 26, 27, 28) in senkrechter Richtung verfahrbaren Hubschlitten (40) besteht, der mittels einer Antriebseinrichtung (45) heb- und senkbar ist und der einen waagerechten Tragarm (50) aufweist, der mittels einer Antriebseinrichtung (55) in waagerechter Richtung ein- und ausfahrbar ist, wobei die Tragarme (50) der Hubschlitten (40) der Hubsäulen (21, 23) auf der einen Seite des Fahrzeuggleises (30) den Tragarmen (50) der Hubschlitten (40) der Hubsäulen (22, 24) auf der qanderen Seite des Fahrzeuggleises (30) sich gegenüberliegend sind und die Tragarme (50) in den Transportgutbereich einfahrbar und aus diesem ausfahrbar sind, und wobei die Antriebseinrichtungen (45, 55) für die Hubschlitten (40) und für die Tragarme (50) als hydraulische, druckluftbetriebene, elektromotorische oder brennkraftmaschinenbetriebene Antriebe ausgebildet sind, und aus einer Gleisfahrzeugpositionierungs- und -schleppvorrichtung (60) besteht, die aus einer mittels einer Antriebseinrichtung (65) in Fahrzeuggleislängsrichtung verfahrbaren Transporteinrichtung (62) mit einem in der Bewegungsbahn des Transportmittelangriffspunktes liegenden Kopplungsarm (63) besteht, der an dem zu transportierenden Transportmittel befestigbar ist, dadurch gekennzeichnet, daß die Schlepp- und Positionierungsvorrichtung (60) als Transporteinrichtung aus einer parallel und seitlich zum Fahrzeuggleis (30) angeordneten Führungsschiene (61) und einem auf der Führungsschiene (61) in Führungsschienenlängsrichtung verfahrbaren Schlepp- und Positionierungsschlitten (62) besteht, der mit einem seitlich auskragenden, in der Bewegungsbahn des Seilhakens (37) an dem Rahmen (36) des Gleisfahrzeuges (35) liegenden Kopplungsarm (63) mit von Hand oder automatisch bedienbaren Zeilhakenverschlußelementen und mit Steuerfühlern, wie Sensoren, Näherungsinitiatoren od.dgl. (191) zum Anhalten und Ausrichten des Schlepp- und Positionierungsschlittens (62) im Seilhakenbereich des Gleisfahrzeuges (35) versehen ist, wobei die Kopplung des Kopplungsarmes (63) mit dem Seilhaken (37) mittels Bolzen oder über Antriebseinrichtungen betätigbare Klauen (64) od.dgl. erfolgt, wobei der Antrieb für den Schlepp- und Positionierungsschlitten (62) mittels einer Antriebseinrichtung (65) erfolgt, die als Kettentrieb ausgebildet ist, der aus einer an der Führungsschiene (61) für den Schlepp- und Positionierungsschlitten (62) in Führungsschienenlängsrichtung verlaufenden, gespannten, endseitig befestigten und zwischen den Endbefestigungspunkten über die gesamte Kettenlänge sich erstreckenden, lose an der Führungsschiene (61) anliegenden Kette (165) und einem an dem Schlepp- und Positionierungsschlitten (62) angetriebenen, in die Glieder der Kette (165) eingreifenden Kettenrad (166) besteht, so daß vermittels des angetriebenen Kettenrades (166) der Schlepp- und Positionierungsschlitten (62) sich an der Kette (165) entlang bewegt, der aus einem die als Doppel-T-Träger ausgebildete und die Kette (165) auf ihrem oberen waagerechten Flansch (61a) tragende Führungsschiene (61) beidseitig übergreifenden Gehäuse (162 ) besteht, in dem das Kettenrad (166) mit der Antriebseinrichtung (167) für das Kettenrad (166) angeordnet ist, wobei das Gehäuse (162) in seinem oberen Bereich mit einem Paar oder mit zwei Paar Laufrädern (163, 164) und mit je zwei Führungsrollen (170, 171) zu beiden Seiten des Steges (61b) der Führungsschiene (61) versehen ist, vermittels derer sich der Schlepp- und Positionierungsschlitten (62) an der Unterseite des oberen Flansches (61a) der Führungsschiene (61) abstützt, und daß eine Steuervorrichtung (90) vorgesehen ist, vermittels der die einzelnen Arbeitsabläufe der Hubschlitten (40) und der Tragarme (50) der Hubsäulen (21, 22, 23, 24) und des Schlepp- und Positionierungsschlittens (62) derart zusammengeführt sind, daß das mit dem Schlepp- und Positionierungsschlitten (62) gekoppelte Gleisfahrzeug (35) von dem Schlepp- und Positionierungsschlitten (62) in den Bereich der Hubsäulen (21, 22, 23, 24) verfahren wird, hierauf die Tragarm (50) im eingezogenen Zustand bis in den Tragarmuntergreifbereich an dem Transportgut abgesenkt und zum Untergreifen des Transportgutes ausgefahren werden, worauf die Tragarme zusammen mit dem Transportgut angehoben, das Gleisfahrzeug mittels des Schlepp- und Positionierungsschlitten (62) aus dem Hubsäulenbereich herausgefahren und unter das Transportgut eine ortsbewegliche Lade- oder Abstellfläche gebracht wird, auf die das Transportgut abgesetzt und aus dem Hubsäulenbereich herausgefahren wird.

2. Anlage nach Anspruch 1, dadurch gekennzeichnet, dar das Gehäuse (162) des Schlepp- und Positionierungsschlittens (62) in seinem der Kette (165) zugekehrten Bereich zwei Umlenkrollen (172, 173) zur Führung der Kette (165) um das in dem Innenraum des Gehäuses (162) liegende Kettenrad (166) aufweist.

3. Anlage nach einem der Ansprüche 1 und 2, dadurch gekennzeichnet, daß die Kette (165) auf der Führungsschiene (61) in ihren beiden Endbereichen (165a, 165b) unter Zwischenschaltung von Federelementen, wie z.B.Tellerfedern od.dgl. (174, 175) im vorgespannten Zustand gehalten ist, wobei die freien Enden der Kette (165) im Anschluß an die Federelemente in Gleitstäbe (176, 177) übergehen, die in Hülsen (178, 179) frei verschieblich gehalten sind, wobei am außen liegenden Ende einer jeden Führungshülse (178; 179) ein Überwachungsorgan (180; 181) angeordnet ist, das als Näherungsinitiator, lichtoptischer Sensor od.dgl. ausgebildet ist und das über eine Steuereinrichtung mit einer in dem Gehäuse (162) des Schlepp- und Positionierungsschlittens (62) angeordneten Bremseinrichtung verbunden ist, vermittels der ein Abbremsen der Fahrbewegung des Schlepp- und Positionierungsschlittens (62) bei mangelndem Betriebszustand des Antriebes, z.B. Reißen der Kette (165), für den Schlepp- und Positionierungsschlitten (62) bewirkbar ist.

4. Anlage nach Anspruch 3, dadurch gekennzeichnet, daß die Bremseinrichtung des Schlepp- und Positionierungsschlittens (62) aus mit der Führungsschiene (61) wirksam werdenden mechanischen oder magnetischen Bremsbacken, Bremskeilen od.dgl. besteht.

5. Anlage nach einem der Ansprüche 1 bis 4, dadurch gekennzeichnet, daß im Bereich der beiden Hubsäulen (21, 22 oder 23, 24) ein Steuerfühler (190) für den Schlepp- und Positionierungsschlitten (62) so angeordnet ist, daß bei einem Beaufschlagen des Steuerfühlers durch den Schlepp- und Positionierungsschlitten (62) dieser mit dem Transportfahrzeug (35) in einer Position zum Stehen gebracht wird, daß die Tragarme (50) in den Untergreifbereich des Transportgutes (C) fahrbar sind.

6. Anlage nach einem der Ansprüche 1 bis 5, dadurch gekennzeichnet, daß parallel zu der Führungsschiene (61), benachbart zu deren Außenseite, eine Stromzuführungsschiene (195) angeordnet ist, die mit einem an dem Schlepp- und Positionierungsschlitten (62) vorgesehenen Stromabnehmer (196) in Wirkverbindung steht.

7. Anlage nach einem der Ansprüche 1 bis 6, dadurch gekennzeichnet, daß der Schlepp- und Positionierungsschlitten (62) mit einem förderkettenunabhängigen Antrieb versehen ist, der aus einer Antriebsspindel, einem Zahnstangentrieb, elektromagnetischen Linearantrieb, Seilantrieb, einem hydraulischen oder einem als Brennkraftmaschine ausgebildeten Antrieb besteht.

## Claims

1. System for moving goods to be transported, more particularly receptacles such as containers, from means of transportation travelling in one direction, particularly railroad vehicles with cable hooks (37) provided on the vehicle frame, on to travelling depositing surfaces, especially trucks, track-bound vehicles, also for intraplant conveyance, etc., while employing a positioning means for positioning the railroad vehicles within the transporation area, the system in this case comprising a stationary hoisting device (20) for the goods to be transported (C) driven by a hydraulic or other suitable driving means, the hoisting device (20) being provided with four elevating columns (21, 22, 23, 24), of which, in each case, two elevating columns (21, 23; 22, 24) are arranged spaced apart from each other on each side of the vehicle track (30) and the elevating columns (21, 23) of the one side of the hoisting device (20) are located opposite the elevating columns (22, 24) of the other side, while each elevating column (21, 22, 23, 24) comprises four vertical guide beams (25, 26, 27, 28) complementing each other so as to form a square or rectangular base and elevating carriage (40) displaceable within the guide beams (25, 26, 27, 28) in the vertical direction which, with the aid of a driving means (45), can be raised and lowered and is provided with a horizontal supporting arm (50) which, with the aid of a driving means (55), are able to travel inwardly and outwardly, in which supporting arms (50) of the elevating carriage (40) of the elevating columns (21, 23) on the one side of the vehicle track (30) are located opposite the supporting arms (50) of the elevating carriage (40) of the elevating columns (22, 24) on the other side of the vehicle track (30) and all the supporting arms (50) are able to travel within the area of the goods to be transported and capable of travelling out of said area, and in which the driving means (45, 55) of the etevating carriages and of the supporting arms (50) are constructed in the form of compressed air-operated, electromotively or internal combustion engine-operated drives and comprises a track vehicle positioning and towing means (60), which comprises a conveying means (62) able to travel in the longitudinal direction of the vehicle track with the aid of a driving means (65), said conveying means (62) being provided with a coupling arm (63) located in the path of movement of the point of application of the means of transport, which can be secured to the means of transport to be transported, characterized in that the towing and positioning means (60) in the form of a conveying means comprises a guide track (61) disposed parallelly and laterally to the vehicle track (30) and a towing and positioning carriage (62) able to travel on the guide track (61) in the longitudinal direction of the guide track which is provided· with a laterally projecting coupling arm (63) located in the path of movement of the cable hook (37) on the frame (36) of the track vehicle (35), with manually or automatically operable cable hook closing members (claws 64), and with control sensing elements, such as sensors, approximation initiators, etc., (191) for stopping and aligning the towing and positioning carriage (62) within the cable hook area of the track vehicle (35), in which the coupling of the coupling arm (63) with the cable hook (37) is effected with the aid of bolts or by means of claws (64), etc., that can be actuated by driving means, the drive of the towing and positioning carriage (62) being effected with the aid of a driving means (65) that is constructed in the form of a chain drive which comprises a stretched chain (165) proceeding on the guide track (61) of the towing and positioning carriage (62) in the longitudinal direction of the guide track which is fastened at the ends and extending between the terminal fastening points across the entire length of the chain which rests loosely against the guide track (61), and a sprocket wheel (166) driven on the towing and positioning carriage (62) engaging into the links of the chain (165) so that, by means of the driven sprocket wheel (166), the towing and positioning carriage (62) moves along the chain (165), said carriage comprising a housing (162) constructed in the form of a double T-shaped girder engaging over the guide track (61) on both sides supporting the chain (165) on its upper horizontal flange (61a), in which housing (162) the sprocket wheel (166) with the driving means (167) of the sprocket wheel (166) is disposed, while the housing (162), within its upper area, is provided with a pair or with two pairs of travelling wheels (163, 164) and with two guide rollers (170, 171) each on both sides of the web (61b) of the guide track (61), with the aid of which the towing and positioning carriage (62) is supported on the underside of the upper flange (61a) of the guide track (61), and in that a control unit (90) is provided, by means of which the individual operational sequences of the elevating carriages (40) and of the supporting arms (50) of the elevating columns (21, 22, 23, 24) and of the towing and positioning carriage (62) are combined in such a way that the track vehicle (35) coupled to the towing and positioning carriage (62) is, by means of the towing and positioning carriage (62), made to travel into the area of the elevating columns (21, 22, 23, 24), the supporting arms (50) hereupon being lowered in the retracted state as far as into the area where the supporting arm engages underneath the goods to be transported and are extended for engaging underneath said goods to be transported, whereupon the supporting arms are raised together with the goods to be transported, the track vehicle is moved out of the elevating column area by means of the towing and positioning carriage (62) and a travelling loading or depositing area is brought underneath the goods to be transported, upon which the goods to be transported are deposited and transported out of the area of the elevating columns.

2. System according to Claim 1, characterized in that the housing (162) of the towing and positioning carriage (62), within the area facing the chain (165), is provided with two deflector rolls (172, 173) for guiding the chain (165) around the sprocket wheel (166) disposed within the interior of the housing (162).

3. System according to Claim 1, characterized in that the chain (165) is held on the guide track (61) within its two terminal areas (165a, 165b) with the interposition of spring members, such as e.g. cup springs, etc., (174, 175) in the preloaded state, while the free ends of the chain (165) following the spring members pass into guide rods (176, 177) that are held freely displaceabe in sleeves (178, 179), while on the outwardly located end of each guide sleeve (178; 179), a monitoring means (180; 181) is disposed which is constructed in the form of an approximation initiator, photo-optical sensor, etc., and which, by means of a control unit, is connected to a braking means mounted inside the housing (162) of the towing and positioning carriage (62), with the aid of which a braking of the travelling movement of the towing and positioning carriage (62) can be brought about if the operating condition of the drive were to fail, e.g. by a rupturing of the chain (165).

4. System according to Claim 3, characterized in that the braking means of the towing and positioning carriage (62) comprises mechanical or magnetic brake shoes, chocks, etc., becoming effective with the guide rail (61).

5. System according to any of the Claims 1 to 4, characterized in that, within the area of the two elevating columns (21, 22, 23, 24), a control sensing element (190) for the towing and positioning carriage (62) is disposed in such a way that, when the control sensing element is acted upon by the towing and positioning carriage (62), the latter is, with the conveying vehicle (35), brought to a halt in such a position that the supporting arms (50) can be moved into the engagement area underneath the goods to be transported (C).

6. System according to any of the Claims 1 to 5, characterized in that, parallel to the guide rail (61), adjacent to its outside, a power supply lead (195) is disposed which is operatively connected to a current collector (196) provided on the towing and positioning carriage (62).

7. System according to the Claims 1 to 6, characterized in that the towing and positioning carriage (62) is provided with a conveyor chain-independent drive which comprises a driving spindle, a rack-and-pinion drive, an electromagnetic linear drive, a cable drive, a hydraulic drive or a drive means constructed in the form of an internal combustion engine.

**Revendications**

1. Installation pour déplacer des marchandises transportées, en particulier des récipients, comme des conteneurs, à partir de moyens de transport se déplaçant dans une direction, en particulier de véhicules de chemin de fer avec des crochets pour câble (37) prévus sur le châssis des véhicules, pour les mettre sur des aires de stockage déplaçables, en particulier des camions, des véhicules roulants sur rails, également pour le transport au sein d'une entreprise ou équivalent, qui utilise un dispositif de positionnement pour le positionnement des véhicules de chemin de fer dans la zone où a lieu le déplacement, l'installation se composant d'un dispositif de levage (20) des marchandises transportées (C) avec quatre colonnes de levage (21, 22, 23, 24) qui est stationnaire et commandé de manière hydraulique ou au moyen d'autres organes de commande appropriés, deux colonnes de levage (21, 23; 22, 24) étant respectivement diposées de chaque côté des rails du véhicule (30), à un certain écart l'une de l'autre et les colonnes de levage (21, 23) de l'un de côtés du dispositif de levage (20) étant situées en face des colonnes de levage (22, 24) de l'autre côté, chaque colonne de levage (21, 22, 23, 24) se composant de quatre longerons de guidage verticaux (25, 26, 27, 28) se complétant en formant une surface de base carrée ou rectangulaire et d'un chariot de levage (40) translatable dans les longerons de guidage (25, 26, 27, 28) dans le sens vertical qui peut être levé et abaissé au moyen d'un dispositif de commande (45) et qui présente un bras porteur horizontal (50) qui peut être déplié et replié dans le sens horizontal au moyen d'un dispositif de commande (55), les bras porteurs (50) des chariots de levage (40) des colonnes de levage (21, 23) de l'un des côtés des rails du véhicule (30) étant situés en face des bras porteurs (50) des chariots de levage (40) des colonnes de levage (22, 24) de l'autre côté des rails du véhicule (30) et tous les bras porteurs (50) pouvant être dépliés et repliés dans la zone des marchandises transportées, les dispositifs de commande (45, 55) pour les chariots de levage (40) et les bras porteurs (50) étant configurés comme des commandes hydrauliques, à commande pneumatique, par moteur électrique ou par moteur à combustion interne, l'installation ce composant également d'un dispositif de positionnement et de remorquage (60) pour véhicules roulants sur rails qui se compose d'une dispositif de transport (62), translatable dans le sens longitudinal des rails du véhicule au moyen d'un dispositif de commande (65), avec un bras de couplage (63) qui est situé dans le parcours de déplacement du point d'attaque du moyen de transport et qui peut être fixé au moyen de transport devant être transporté, caractérisée en ce que le dispositif de positionnement et de remorquage (60), en tant que dispositif de transport, se compose d'un rail de guidage (61) disposé parallèlement et latéralement par rapport aux rails du véhicule (30) et d'un chariot de positionnement et de remorquage (62) translatable sur le rail de guidage (61) dans le sens longitudinal du rails de guidage, chariot qui est équipé d'un bras de couplage (63) qui fait saillie latéralement, qui est situé dans le parcours de déplacement du crochet pour câble (37) sur le châssis (36) du véhicule roulant sur rails (35) et qui est équipé d'éléments de fermeture du crochet pour câble (griffes 64) pouvant être actionnés manuellement ou automatiquement et de palpeurs de commande, tels que des détecteurs, détecteurs de proximité ou équivalent (191) pour arrêter et aligner le chariot de positionnenmet et de remorquage (62) dans la zone du crochet pour câble du véhicule roulant sur rails (35), le couplage du bras de couplage (63) au crochet pour câble (37) étant effectué à l'aide de boulons ou de griffes (64) ou équivalent pouvant être actionnées par des dispositifs de commande, la commande du chariot de positionnement et de remorquage (62) étant effectuée au moyen d'un dispositif de commande (65) configuré comme une commande par chaîne qui se compose d'une chaîne (165) tendue, qui va le long du rail de guidage (61) pour le chariot de positionnement et de remorquage (62) dans le sens longitudinal du rail de guidage, qui est fixée à ses extrémités, qui s'étend sur toute la longueur de la chaîne entre les deux points de fixation des extrémités et qui est adjacente au rail de guidage (61) de manière mobile et d'une roue à chaîne (166) commandée sur le chariot de positionnement et de remorquage (62) et se déplace dans les maillons de la chaîne (165) si bien que le chariot de positionnement et de remorquage (62) se déplace le long de la chaîne (165) au moyen de la roue à chaîne (166) commandée, chariot qui se compose d'un bâti (162) qui a prise des deux côtés sur le rail de guidage (61) qui porte la chaîne (165) sur sa bride horizontale supérieure (61a) et qui est configuré comme un support en double T, bâti dans lequel sont disposés la roue à chaîne (166) et le dispositif de commande (167) pour la roue à chaîne (166), le bâti (162) étant équipé, dans sa zone supérieure, d'une paire ou de deux paires de roues de roulement (163, 164) et de respectivement deux galets de guidage (170, 171) des deux côtés de la traverse (61b) du rail de guidage (61) au moyen desquels le chariot de positionnement et de remorquage (62) s'appuie sur la face inférieure de la bride supérieure (61a) du rail de guidage (61) et en ce qu'il est prévu un dispositif de commande (90) au moyen duquel les différentes phases de travail des chariots de levage (40) et des bras porteurs (50) des colonnes de levage (21, 22, 23, 24) et du chariot de positionnement et de remorquage (62) sont réunies de manières telle que le véhicule roulant sur rails (35) couplé au chariot de positionnement et de remorquage (62) est déplacé dans la zone des colonnes de levage (21, 22, 23, 24), ce après quoi les bras porteurs (50) à l'état replié sont abaissés sur les marchandises à transporter jusque dans la zone de prise par en dessous des bras porteurs et sont dépliés pour saisir par en dessous les marchandises à transporter, ce après quoi les bras porteurs sont soulevés avec les marchandises à transporter, le véhicule roulant sur rails quitte la zone des colonnes de levage au moyen du chariot de positionnement et de remorquage (62) et une aire de stockage ou de déchargement déplaçable, sur laquelle les marchandises à transporter sont déposées et quittent la zone des colonnes de levage, étant amenée sous les marchandises à transporter.

2. Installation selon la revendication 1, caractérisée en ce que le bâti (162) du chariot de positionnement et de remorquage (62) présente, dans sa zone tournée vers la chaîne (165), deux poulies de guidage (172, 173) pour le guidage de la chaîne (165) autour de la roue à chaîne (166) située à l'intérieur du bâti (162).

3. Installation selon l'une des revendications 1 et 2, caractérisée en ce que la chaîne (165) est maintenue à l'état précontraint sur le rail de guidage (61) dans ses deux zones terminales (165a, 165b) par l'intercalage d'éléments à ressort, tels que des ressorts à disques ou équivalent (174, 175), les extrémités libres de la chaîne (165) se poursuivant à la suite des éléments à ressorts, en baguettes coulissantes (176, 177) qui sont maintenues en translation libre dans des douilles (178, 179), un organe de contrôle (180, 181), configuré comme un détecteur de proximité, un détecteur optique sensible à la lumière ou équivalent, étant placé à l'extrémité située à l'extérieur de chacune des douilles de guidage (178, 179) et étant relié, par l'intermédiaire d'un dispositif de commande, à un dispositif de freinage placé dans le bâti (162) du chariot de positionnement et de remorquage (62) un moyen duquel on peut effectuer un freinage du mouvement de translation du chariot de positionnement et de remorquage (62) en cas d'état de marche défectueux de la commande du chariot de positionnement et de remorquage (62), par ex. en cas de rupture de la chaîne (165).

4. Installation selon la revendication 3, caractérisée en ce que le dispositif de freinage du chariot de positionnement et de remorquage (62) se compose de segments de frein, de sabots de frein ou équivalent mécaniques ou magnétiques qui agissent avec le rail de guidage (61).

5. Installation selon l'une ds revendications 1 à 4, caractérisée en ce qu'un palpeur de commande (190) pour le chariot de positionnement et de remorquage (62) est placé dans la zone des deux colonnes de levage (21, 22 ou 23, 24) de manière telle que, lors d'un amorçage du palpeur de commande par le chariot de positionnement et de remorquage (62) celui-ci est arrêté avec le véhicule de transport (35) dans une position telle que les bras porteurs (50) peuvent être amenés dans la zone de prise par en dessous des marchandises à transporter (C).

6. Installation selon l'une des revendicaitons 1 à 5, caractérisée en ce qu'une barre d'alimentation (195), qui est en liaison active avec un balai conducteur (196) prévu sur le chariot de positionnement et de remorquage (62), est placée parallèlement au rail de guidage (61), au voisinage de sa face extérieure.

7. Installation selon l'une des revendications 1 à 6, caractérisée en ce que le chariot de positionnement et de remorquage (62) est équipé d'une commande indépendante de la chaîne de transport qui se compose d'un arbre de commande, d'une commande à crémaillère, d'une commande linéaire électromagnétique, d'une commande par câble, d'une commande hydraulique ou d'une commande configurée comme un moteur à combustion interne.

EP 0 267 989 B1

# Fig.1

# Fig.2

# Fig. 3

Fig.4

Fig.5

Fig.6